# EUROPEAN PATENT SPECIFICATION

(11) **EP 1 743 107 B1**
(45) Date of publication and mention of the grant of the patent: **11.11.2009**
(21) Application number: 05744392.1
(22) Date of filing: 03.05.2005
(51) Int. Cl.: F16H 9/00

(54) **COAXIAL ELECTRICAL ACTUATOR FOR CONTINUOUSLY VARIABLE TRANSMISSION**
KOAXIALES ELEKTRISCHES STELLGLIED FÜR STUFENLOSES GETRIEBE
COMMANDE ELECTRIQUE COAXIALE DESTINEE A UNE TRANSMISSION VARIABLE EN CONTINU

(30) Priority: 03.05.2004 US 567468 P; 02.05.2005 US 120148
(43) Date of publication of application: 17.01.2007
(73) Proprietor: Purdue Research Foundation, West Lafayette, IN 47906-4182 (US)
(72) Inventor: STARKEY, John, M., West Lafayette, IN 47906 (US)
(74) Representative: Beier, Ralph
(86) International application number: PCT/US2005/015149
(87) International publication number: WO 2005/108824

(56) References cited:
- WO-A-00/60256
- WO-A-03/048612
- DE-A1- 19 851 738
- US-A- 5 527 225

## Description

### TECHNICAL FIELD OF THE INVENTION

This invention relates generally to transmissions, and more particularly to methods and apparatus for actuation of continuously variable transmissions, according to the preamble of claims 1, 3.

### BACKGROUND OF THE INVENTION

Transmissions are devices that transform the speed and torque in vehicles using gears, belts, or other drive components. Most transmission designs use discrete speed ratios: low ratios for acceleration, hill climbing, and heavy hauling, and high ratios for higher-speed travel. They use multiple parallel gear sets between input and output shafts. By changing which gear set carries the loads between the shafts, the speed ratio between the input and output shafts is altered.

Transmissions have also been designed that are continuously variable (CVTs). These generally use friction to transfer load from an input shaft to an output shaft. By altering the radial position of friction rollers, belts, or other components, the speed ratio is changed.

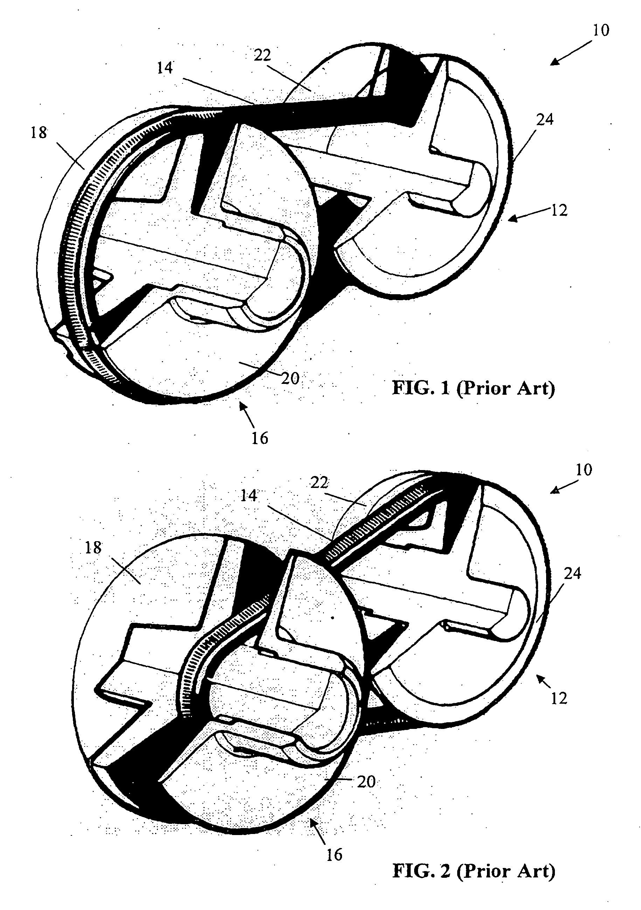

A typical CVT design 10 is shown in FIGS. 1 and 2. It uses a driving (primary) pulley 12, a wide v-belt 14, and a driven (secondary) pulley 16. The speed ratio is adjusted by altering the width of the driving 12 and driven 16 pulleys, so that the v-belt 14 contacts at varying radii on the pulleys 12 and 16. FIG. 1 shows the CVT 10 operating at a lower speed ratio where the driving pulley halves 22 and 24 are separated and the v-belt 14 contacts the pulley halves 22 and 24 at a small radius. The driven pulley halves 18 and 20 are squeezed together by a spring under these conditions, forcing the belt 14 at the output end to contact at a large radius. This configuration offers maximum torque magnification and speed reduction.

FIG. 2 shows the CVT operating in a higher speed ratio where the pulley halves 22 and 24 of the driving pulley 12 are positioned close together, forcing the v-belt 14 to contact the pulley halves 22 and 24 at a larger radius and increasing the velocity of the v-belt 14. The increased velocity of the v-belt 14 works against the spring force of the driven pulley 16, forcing the driven pulley halves 18 and 20 apart where the v-belt 14 contacts the driven pulley halves 18 and 20 at a smaller radius. This configuration offer maximum speed magnification.

Most current CVTs rely upon fixed-design mechanical or hydraulic actuation that cannot be easily changed to respond to differing demands, such as varying vehicle cargo loads and operator performance demands. Accordingly, there is need for a CVT actuation system that is more flexible and adaptable than the current state of technology.

Other types of transmissions are disclosed in DE 198 51 738 A1 and WO 03/048612 A. However, these conventional transmissions do not comprise an electric actuator having an axially movable rotor.

Further, WO 00/60256 A defines the technological background of the invention.

### SUMMARY OF THE INVENTION

According to an embodiment of the present invention, a coaxial electrical actuator is provided for a continuously variable transmission with first and second pulleys interconnected by a belt. The first pulley is connected to an engine shaft and has a first pulley portion and a second pulley portion axially movable with respect to the first pulley portion. An armature for connection about the engine shaft is adapted for threaded connection to one of the first or second pulley portions. A stator coil for positioning adjacent the armature causes rotation of the armature when energized so that rotation of the armature with respect to the pulley, in response to energization of the stator coil during use, changes the axial spacing between the first and second pulley portions. In this embodiment of the invention, the armature is axially movable with respect to the first pulley portion.

According to an embodiment of the present invention, a method for electrically actuating a continuously variable transmission having first and second pulleys interconnected by a belt is provided. The first pulley is adapted for mounting on an engine shaft and has a first pulley portion and an axially movable second pulley portion. An armature is provided adjacent the engine shaft so as to normally rotate therewith and is rotatably coupled to the first or second pulley portion so as to move one pulley portion axially with respect to the other pulley portion in response to relative rotation between the armature and the pulley. A stator coil is provided adjacent the armature. Energizing the stator coil to cause the armature to rotate relative to the pulley changes the axial spacing between the first and second pulley portions. In this embodiment of the invention, the armature is axially movable with respect to the first pulley portion.

### BRIEF DESCRIPTION OF THE DRAWINGS

FIG. 1 is a perspective view of a continuously variable transmission of the prior art at a lower speed ratio.
FIG. 2 is a perspective view of a continuously variable transmission of the prior art at a higher speed ratio.
FIG. 3 is a cross-sectional view of an embodiment of a coaxially mounted electrical actuator in accordance with the present invention, in a lower speed ratio configuration.
FIG. 4 is a cross-sectional view of the electrical actuator of FIG. 3, shown in a higher speed ratio configuration.

### DETAILED DESCRIPTION OF THE PREFERRED EMBODIMENTS

For the purpose of promoting an understanding of the principles of the invention, reference will now be made to the embodiments illustrated in the drawings and specific language will be used to describe the same. It will nevertheless be understood that no limitation of the scope of the invention is thereby intended, such alterations and further modifications in the illustrated device and such further applications of the principles of the invention as illustrated therein being contemplated as would normally occur to one skilled in the art to which the invention relates.

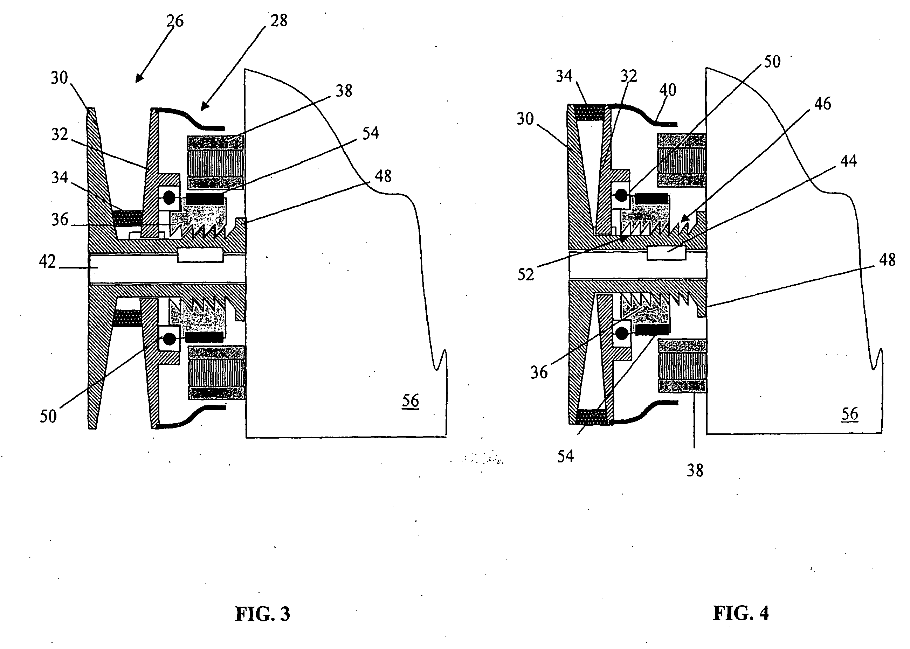

FIGS. 3 and 4 show a pulley 26 and a coaxially mounted electrical actuator 28 for a continuously variable transmission (CVT) in accordance with one embodiment of the present invention. The pulley has a fixed pulley half or portion 30 and a movable pulley half or portion 32 interconnected by a belt 34. The electrical actuator includes an armature 36 and a stator coil 38. A cover 40 connected to the movable pulley half 32 protects the coaxially mounted electrical actuator.

The fixed pulley half 30 is fixedly connected to the engine shaft 42, such as with a key 44, and has an externally threaded, preferably self-locking pitch, portion 46 and an armature stop 48. The movable pulley half is positioned about the engine shaft, adjacent the fixed pulley half. Movement of the movable pulley half 32 is effected by movement of the armature 36, which is connected to movable pulley half 32 by way of a thrust bearing 50.
During a shift operation of the transmission, the threaded portion 46 of the fixed pulley half 30 coacts with rotation of the armature 36 to move the movable pulley half 32 with respect to the fixed pulley half 30 to change the speed ratio of the transmission. The armature stop 48 limits movement of the movable pulley half 32 with respect to the fixed pulley half 30, setting the maximum low speed ratio of the transmission.

The armature 36 shown in the FIGS. 3 and 4 includes a nut mounted on the fixed pulley half 32 and normally spins at the same rate as the engine shaft 42. The armature nut has an internally threaded, preferably self-locking pitch, portion 52 which mates with the threaded portion 46 of the fixed pulley half 30. The armature 36 has a magnetized portion 54 and, together with stator 38, forms an electric motor coaxially mounted on the engine shaft.

The stator coil 38 is fixed to an external wall of the engine 56. During a shift operation, it is selectively energized to create an alternating electrical field that acts upon the magnetized portion 54 of the armature 36, causing it to rotate with respect to the threaded portion 46 of the fixed pulley half 30. Such relative motion causes the movable pulley half 32 to move toward or away from the fixed pulley half 30, depending upon the direction of rotation of the armature 36. Movement of pulley half 32 toward fixed pulley half 30 decreases the spacing between the pulley halves, which forces the belt 34 toward the outer edge of the pulley, as shown in FIG. 4, effectively increasing the speed ratio of the transmission. Movement of pulley half 32 away from fixed pulley half 30 increases the spacing between the pulley halves and allows the belt to move toward the center of the pulley, as shown in FIG. 3, effectively decreasing the speed ratio of the transmission.

Alternating electric current may be continuously supplied to the stator coil 38 during a shift operation to either slow down or speed up the rotation of the armature relative to the engine shaft and the fixed pulley. Alternatively, electric current may be supplied to the stator coil 38 in appropriately timed pulses to incrementally move the armature 36, e. g., in stepwise fashion. When power is removed from the stator coil 38, the movable pulley half 32 preferably remains stationary with respect to the fixed pulley half 30, due in part to the self- locking thread connection between the threaded portion 46 and the armature nut 36. This reduces power consumption of the coaxial electrical actuator 28, as well as stator coil heating, because actuation of the stator coil 38 is only required when change of the speed ratio is desired.

The CVT incorporating the present invention may be operated in open-loop fashion, e. g., by energizing the stator coil as a simple function of engine speed or, in certain embodiments, simply by means of suitable control switches connected to the stator coil. Alternatively, an electronic control system is provided which is responsive to engine speed and throttle position. Such an electronically controlled CVT may operate open-loop but preferably operates as a closed-loop control system responsive to feedback indicative of the actual state of the transmission, which may be measured, for example, in terms of the position of the movable pulley.

While the invention has been illustrated and described in detail in the drawings and foregoing description, the same is to be considered as illustrative and not restrictive in character, it being understood that only the preferred embodiment has been shown and described and that all changes and modifications that come within the spirit of the invention are desired to be protected. For example, while a threaded connection is described above for the armature and the pulley, unthreaded connections are also contemplated. One such actuator comprises an electric solenoid, e. g., a three-position or other multi-position solenoid, mounted on an external wall of the engine with its longitudinal axis parallel to the engine shaft and with its plunger coupled to the movable pulley half so as to move the pulley half in response to an electrical signal.

Another form of electric actuator may include an electromagnetic actuator as in a loudspeaker, e.g., with a magnetic collar about the engine shaft coupled to an electromagnetic coil fixed to the engine. The magnetic collar may, for example, be similar to the armature of FIG. 3 but without threads (coupled to an unthreaded sleeve that is otherwise like threaded sleeve 46 on the fixed pulley of FIG. 3), and the fixed electromagnetic coil may be similar to the stator of FIG. 3. Other forms of linear electric actuators are also contemplated, such as linear stepper motors.

The electrical actuator of the present invention may also be used in other ways, such as, for example, a starter motor for an internal combustion engine. The armature may be moved toward the engine, effectively disengaging the movable pulley from the belt, and contacting the armature stop so as to apply torque directly to the engine shaft, turning the engine shaft for starting. The electrical actuator may also be used as a power source - as an auxiliary electric motor or in certain applications as the primary electric motor - in a hybrid vehicle of the type that uses an electric motor and internal combustion engine to power the vehicle. For example, the electric actuator may be sized to provide significant drive torque to the transmission pulley to augment the torque used to drive the vehicle.

## Claims

1. A coaxial electrical actuator (28) for a continuously variable transmission having first and second pulleys (12, 16) interconnected by a belt (14), the first pulley (26) connected to an engine shaft (42) and having a first pulley portion (30) and a second pulley portion (32) axially movable with respect to the first pulley portion (30), said actuator (28) comprising:
an armature (36) for connection about the engine shaft (42), said armature (36) adapted for threaded connection to one of the first and second pulley portions (30, 32); and
a stator coil (38) for positioning adjacent said armature (36) and causing rotation thereof when energized, whereby rotation of said armature (36) with respect to the pulley in response to energization of said stator coil (38) during use changes an axial spacing between the first and second pulley portions (30, 32),
**characterized in that**
the armature (36) is axially movable with respect to said first pulley portion (30).

2. The actuator (28) of claim 1, wherein the first pulley portion (30) is axially fixed during use and said armature (36) is adapted for threaded connection thereto.

3. A method of electrically actuating a continuously variable transmission having first and second pulleys (12, 16) interconnected by a belt (14), said first pulley (26) adapted for mounting on an engine shaft (42) and having a first pulley portion (30) and an axially movable second pulley portion (32), said method comprising:
- providing an armature (36) adjacent the engine shaft (42) so as to normally rotate therewith, said armature (36) rotatably coupled to the first or second pulley portion (30, 32) so as to move one pulley portion axially with respect to the other pulley portion in response to relative rotation between said armature (36) and the pulley;
- providing a stator coil (38) adjacent said armature (36); and
- energizing said stator coil (38) to cause said armature (36) to rotate relative to said pulley and thereby change an axial spacing between said first and second pulley portions (30, 32),
**characterized in that**
- the armature (36) is axially moved with respect to said first pulley portion (30).

4. The method of claim 3, wherein the first pulley portion is axially fixed during use and said armature is adapted for threaded connection thereto.

## Patentansprüche

1. Koaxialer elektrischer Aktuator (28) für eine kontinuierlich variable Transmission mit ersten und zweiten Rollen (12, 16), die miteinander verbunden sind durch ein Band (14), wobei die erste Rolle (26) verbunden ist mit einer Motorwelle (42) und einen ersten Rollenabschnitt (30) und einen zweiten Rollenabschnitt (32) aufweist, der bezüglich dem ersten Rollenabschnitt (30) axial beweglich ist, wobei der Aktuator (28) Folgendes umfasst:
einen Anker (36) zur Verbindung um die Motorwelle (42), wobei der Anker (36) angepasst ist zur gewindeartigen Verbindung mit einem der ersten und zweiten Rollenabschnitte (30, 32); und
eine Stator-Spule (38) zum Positionieren benachbart dem Anker (36) und Veranlassen einer Drehung davon, wenn erregt, wodurch eine Drehung des Ankers (36) bezüglich der Rolle in Erwiderung auf eine Erregung der Stator-Spule (38) bei Verwendung einen axialen Raum zwischen den ersten und zweiten Rollenabschnitten (30, 32) ändert,
**dadurch gekennzeichnet, dass**
der Anker (36) axial beweglich ist bezüglich dem ersten Rollenabschnitt (30).

2. Aktuator (28) gemäß Anspruch 1, wobei der erste Rollenabschnitt (30) axial festgelegt ist bei Verwendung und der Anker (36) angepasst ist zur gewindeartigen Verbindung daran.

3. Verfahren zum elektrischen Aktuieren einer kontinuierlich variablen Transmission mit ersten und zweiten Rollen (12, 16), die miteinander verbunden sind durch ein Band (14), wobei die erste Rolle (26) angepasst ist zum Montieren an eine Motorwelle (42) und einen ersten Rollenabschnitt (30) und einen axial beweglichen zweiten Rollenabschnitt (32) aufweist, wobei das Verfahren Folgendes umfasst:
- Bereitstellen eines Ankers (36) benachbart der Motorwelle (42), um normal damit zu drehen, wobei der Anker (36) drehbar gekoppelt ist an den ersten oder zweiten Rollenabschnitt (30, 32), um einen Rollenabschnitt axial bezüglich dem anderen Rollenabschnitt zu bewegen in Erwiderung auf eine relative Drehung zwischen dem Anker (36) und der Rolle;
- Bereitstellen einer Stator-Spule (38) benachbart dem Anker (36); und
- Erregen der Stator-Spule (38), um den Anker (36) zu veranlassen, sich relativ zu der Rolle zu drehen und **dadurch** einen axialen Raum zwischen den ersten und zweiten Rollenabschnitten (30, 32) zu ändern,
**dadurch gekennzeichnet, dass**
- der Anker (36) axial bewegt wird bezüglich dem ersten Rollenabschnitt (30).

4. Verfahren gemäß Anspruch 3, wobei der erste Rollenabschnitt axial festgelegt ist bei Verwendung und der Anker angepasst ist zur gewindeartigen Verbindung daran.

## Revendications

1. Actionneur électrique coaxial (28) pour une transmission à variation continue comportant des première et seconde poulies (12, 16) reliées l'une à l'autre par une courroie (14), la première poulie (26) étant reliée à un arbre de moteur (42) et comportant une première partie de poulie (30) et une seconde partie de poulie (32) mobile axialement par rapport à la première partie de poulie (30), ledit actionneur (28) comprenant :
un induit (36) destiné à être relié autour de l'arbre de moteur (42), ledit induit (36) étant adapté pour être relié par vissage à l'une des première et seconde parties de poulie (30, 32) ; et
une bobine de stator (38) destinée à être positionnée adjacente audit induit (36) et à entraîner celui-ci en rotation lorsqu'elle est alimentée, moyennant quoi la rotation dudit induit (36) par rapport à la poulie en réponse à l'alimentation de ladite bobine de stator (38) en utilisation modifie un espacement axial entre les première et seconde parties de poulie (30, 32),
**caractérisé en ce que**
l'induit (36) est mobile axialement par rapport à ladite première partie de poulie (30).

2. Actionneur (28) selon la revendication 1, dans lequel la première partie de poulie (30) est fixe axialement en utilisation et ledit induit (36) est adapté pour être relié à celle-ci par vissage.

3. Procédé d'actionnement électrique d'une transmission à variation continue comportant des première et seconde poulies (12, 16) reliées l'une à l'autre par une courroie (14), ladite première poulie (26) étant adaptée pour être montée sur un arbre de moteur (42) et comportant une première partie de poulie (30) et une seconde partie de poulie (32) mobile axialement, ledit procédé consistant à :
- prévoir un induit (36) adjacent à l'arbre de moteur (42) de manière à tourner normalement avec celui-ci, ledit induit (36) étant couplé en rotation à la première ou à la seconde partie de poulie (30, 32) de manière à déplacer une partie de poulie axialement par rapport à l'autre partie de poulie en réponse à une rotation relative entre ledit induit (36) et la poulie ;
- prévoir une bobine de stator (38) adjacente audit induit (36) ; et
- alimenter ladite bobine de stator (38) pour amener ledit induit (36) à tourner par rapport à ladite poulie et à modifier de ce fait un espacement axial entre lesdites première et seconde partie de poulie (30, 32),
**caractérisé en ce que**
- l'induit (36) est déplacé axialement par rapport à ladite première partie de poulie (30).

4. Procédé selon la revendication 3, dans lequel la première partie de poulie est fixe axialement en utilisation et ledit induit est adapté pour être relié à celle-ci par vissage.
